# EUROPÄISCHE PATENTANMELDUNG

(11) **EP 4 325 019 A1**
(43) Veröffentlichungstag der Anmeldung: **21.02.2024**
(21) Anmeldenummer: 22191017.7
(22) Anmeldetag: 18.08.2022
(51) Int. Cl.: E06B 3/42, H02G 11/00

(54) **SCHIEBEFENSTER- ODER SCHIEBETÜRANORDNUNG**

(71) Anmelder: Guhl, Beat, 8561 Ottoberg Thurgau (CH)
(72) Erfinder: GUHL, Beat, 8561 Ottoberg (CH); Lang, Stefan, 8280 Kreuzlingen (CH)
(74) Vertreter: Gachnang AG Patentanwälte

(57) **Zusammenfassung**

Die Erfindung betrifft eine Schiebefenster- oder Schiebetüranordnung mit einem Aussenrahmen und einem im Aussenrahmen verschiebbar gelagerten Schiebeelement, einem Kabelumlenksystem, zur Spannung und Umlenkung eines Kabels, mit einer ersten Kabelumlenkeinheit mit einer ersten Kabelumlenkvorrichtung, einer zweiten Kabelumlenkeinheit, mit einer zweiten Kabelumlenkvorrichtung, und einem Führungskanal, der sich entlang der Richtung der Schwerkraft erstreckt. Die zweite Kabelumlenkeinheit wird durch ein in die Kabelumlenkvorrichtungen eingelegtes Kabel im Führungskanal gegen die Schwerkraft gehalten, sodass sich bei einer Verschiebung des Schiebeelements die zweite Kabelumlenkeinheit in Richtung der Schwerkraft oder in entgegengesetzter Richtung im Führungskanal verschiebt.

## Beschreibung

Die Erfindung betrifft eine Schiebefenster- oder Schiebetüranordnung mit einem Schiebeelement. Dabei ist die Schiebefenster- oder Schiebetüranordnung dazu ausgelegt, dass das Schiebeelement durch ein Kabel mit einer ortsfesten Stromquelle verbindbar und in mit der ortsfesten Stromquelle verbundenem Zustand in Verschieberichtung relativ zur ortsfesten Stromquelle verschiebbar ist.

Bei einer Schiebefenster- oder Schiebetüranordnung ist das Schiebeelement typischerweise in einem ortsfesten Aussenrahmen verschiebbar gelagert. Das Schiebeelement kann beispielsweise ein Schiebefenster oder auch eine Schiebetür sein. Es gibt Schiebeelemente, welche Funktionalitäten bereitstellen, die im Betrieb ständig Strom benötigen. Solche Funktionalitäten betreffen beispielsweise die elektrische Schaltung eines elektrisch schaltbaren Glases zur Abdunklung oder Trübung des Glases, die Glasbruchdetektion durch Glasbruchsensoren, die am Schiebeelement befestigt oder darin integriert sind, Anzeigemittel, welche am Schiebeelement angebracht oder im Glas eines Schiebeelements integriert sind usw. Wird der Strom durch eine ortsfeste Stromquelle, wie beispielweise durch einen ortsfesten Stromanschluss bereitgestellt, muss das Schiebeelement mit der ortsfesten Stromquelle so verbunden sein, dass das Schiebeelement im Betrieb ständig mit der ortsfesten Stromquelle verbunden ist.

Dokument WO 2022/047071 A1 zeigt eine Schiebefenster- oder Schiebetüranordnung, bei der das Schiebeelement über eine kabellose Verbindung mit einer ortsfesten Stromquelle verbunden ist.

Dokument WO 2022/047071 A1 zeigt auch eine Schiebefenster- oder Schiebetüranordnung, bei der das Schiebeelement über ein Energieführungskettensystem mit einer ortsfesten Stromquelle verbunden ist.

Es ist Aufgabe der Erfindung eine Schiebefenster- oder Schiebetüranordnung bereitzustellen, bei der das Schiebeelement verlässlich und einfach mit einer ortsfesten Stromquelle verbindbar ist und die Verbindbarkeit auf engem Raum bereitstellbar ist.

Die Aufgabe wird gelöst durch eine Schiebefenster- oder Schiebetüranordnung gemäss den Merkmalen des Anspruchs 1. Die abhängigen Ansprüche betreffen bevorzugte Ausführungsformen der Schiebefenster- oder Schiebetüranordnung.

Die Erfindung betrifft eine Schiebefenster- oder Schiebetüranordnung mit einem Aussenrahmen und einem im Aussenrahmen verschiebbar gelagerten Schiebeelement, und einem Kabelumlenksystem, zur Spannung und Umlenkung eines Kabels, mit einer ersten Kabelumlenkeinheit mit einer ersten Kabelumlenkvorrichtung, einer zweiten Kabelumlenkeinheit, mit einer zweiten Kabelumlenkvorrichtung, und einem Führungskanal, der sich entlang der Richtung der Schwerkraft erstreckt, wobei die erste Kabelumlenkeinheit so ausgestaltet ist, dass zur Spannung und Umlenkung eines Kabels, das Kabel in die erste Kabelumlenkvorrichtung einlegbar ist, und in Bezug auf eine Bewegung in Richtung der Schwerkraft positionsfest an der Schiebefenster- oder Schiebetüranordnung so montiert ist, dass ein in die erste Kabelumlenkvorrichtung eingelegtes Kabel um eine erste Umlenkachse in Richtung der Schwerkraft umgelenkt wird, die zweite Kabelumlenkeinheit so ausgestaltet ist, dass zur Spannung und Umlenkung eines Kabels, das Kabel in die zweite Kabelumlenkvorrichtung einlegbar ist und, dass diese im Führungskanal verschiebbar ist, so im Führungskanal angeordnet ist, dass bei in die erste und zweite Kabelumlenkvorrichtung eingelegtem Kabel, welches am Schiebeelement und an einer ortsfesten Stromquelle befestigt ist und das Schiebeelement mit der ortsfesten Stromquelle verbindet, die zweite Kabelumlenkeinheit durch das Kabel im Führungskanal gegen die Schwerkraft gehalten wird, sich bei einer Verschiebung des Schiebeelements die zweite Kabelumlenkeinheit in Richtung der Schwerkraft oder in entgegengesetzter Richtung im Führungskanal verschiebt, und das Kabel um eine zweite Umlenkachse in Richtung der ersten Kabelumlenkeinheit umgelenkt wird, und ein Gewicht umfasst, sodass sich bei einer Verschiebung des Schiebeelements die zweite Kabelumlenkeinheit und das Gewicht in Richtung der Schwerkraft oder in entgegengesetzter Richtung im Führungskanal verschieben, und das Kabelumlenksystem dazu ausgelegt ist, ein Kabel, welches das Schiebeelement mit einer ortsfesten Stromquelle verbindet, mit der konstanten Gewichtskraft des Gewichts zu spannen und dadurch das Kabel bei einer Verschiebung des Schiebeelements mit einer gleichbleibenden konstanten Spannkraft gespannt umzulenken.

Eine solche Schiebefenster- oder Schiebetüranordnung wird typischerweise in eine dafür vorgesehene Öffnung in einer Wand einer Baute eingesetzt. Dabei wird der Aussenrahmen in diese Öffnung so eingepasst, dass die Schiebefenster- oder Schiebetüranordnung durch Schieben des Schiebeelements in Verschieberichtung entlang der Längsrichtung des Aussenrahmens öffenbar ist. Dabei dient der Aussenrahmen unter Anderem der Aufnahme, Befestigung, Lagerung und Führung des Schiebeelements und auch möglicher weiterer Elemente, welche auch positionsfest im Aussenrahmen angeordnet sein können. Das Schiebeelement und auch weitere Elemente der Schiebefenster- oder Schiebetüranordnung können jeweils einen Elementrahmen aufweisen, welcher dann im Aussenrahmen angeordnet ist.

Das Kabelumlenksystem kann im Aussenrahmen oder sowohl im Aussenrahmen als auch in einem Elementrahmen angeordnet sein. Das Kabelumlenksystem kann als Kit ausgeführt sein, sodass bestehende Schiebefenster- oder Schiebetüranordnungen mit einem Kabelumlenksystem ausrüstbar sind.

Das Kabel kann ein Stromkabel sein. Das Stromkabel umfasst eine Isolation und einen Leiter. Bei der Spannung und Umlenkung eines Stromkabels durch das Kabelumlenksystem ist die Isolation in direktem Kontakt mit dem Kabelumlenksystem. Bei der Spannung und Umlenkung auftretende Kräfte werden vom Kabelumlenksystem über die Isolation auf den Leiter übertragen.

Spannung eines Kabels bedeutet, dass das Kabel durch eine von aussen auf das Kabel wirkende Kraft zu einem geradlinigeren Kabelverlauf zwischen zwei Kabelfixierpunkten und/oder Kabelumlenkpunkten gezwungen wird.

Umlenken bedeutet, dass - dem Kabel von einem Ende zum anderen Ende entlangfolgend - die Verlaufsrichtung des Kabels durch Umlenkung geändert wird.

Der Führungskanal kann ein Teil des Aussenrahmens oder ein Teil eines Elementrahmens sein, welcher Teil sich entlang der Richtung der Schwerkraft erstreckt. Ist der Führungskanal ein Teil des Aussenrahmens, ist dieser ortsfest. Ist der Führungskanal ein Teil eines Elementrahmens, kann dieser in Verschieberichtung relativ zum Aussenrahmen verschiebbar sein.

Der Führungskanal kann mindestens zwei, bevorzugt drei oder besonders bevorzugt vier Führungskanalwände umfassen. Falls der Führungskanal zwei Führungskanalwände umfasst, können diese parallel zueinander und zueinander beabstandet, oder quer, insbesondere rechtwinklig, zueinander verlaufen. Falls der Führungskanal drei Führungskanalwände umfasst, kann der Führungskanal U-profilförmig ausgestaltet sein. Falls der Führungskanal vier Führungskanalwände umfasst, kann der Führungskanal profilrohrförmig ausgestaltet sein.

In eine Kabelumlenkvorrichtung einlegbar bedeutet, dass die Kabelumlenkeinheit so ausgestaltet ist, dass ein Kabel, welches am Schiebeelement und an einer ortsfesten Stromquelle befestigt ist und das Schiebeelement so mit der ortsfesten Stromquelle verbindet, bei bestehender Verbindung in die Kabelumlenkvorrichtung einlegbar ist. D.h. fürs Einlegen muss die Befestigung des Kabels weder am Schiebeelement noch an der ortsfesten Stromquelle gelöst werden. Dazu kann die Kabelumlenkeinheit eine Öffnung hin zur Kabelumlenkvorrichtung umfassen, über welche das Kabel geführt in die Kabelumlenkvorrichtung einlegbar ist. Des Weiteren kann eine Kabelumlenkvorrichtung eine Rille, in welche ein umzulenkendes Kabel einlegbar ist umfassen, wobei das Kabel beim Umlenken in der Rille geführt und gehalten ist.

Ist der Führungskanal ein Teil des Aussenrahmens, kann die erste Kabelumlenkeinheit in Richtung der Schwerkraft über dem Führungskanal am Aussenrahmen, in Bezug auf eine Bewegung in Richtung der Schwerkraft, positionsfest montiert sein. Ist der Führungskanal ein Teil eines Elementrahmens, kann die erste Kabelumlenkeinheit in Richtung der Schwerkraft über dem Führungskanal am Elementrahmen, in Bezug auf eine Bewegung in Richtung der Schwerkraft, positionsfest montiert sein.

In Bezug auf eine Bewegung in Richtung der Schwerkraft positionsfest montiert bedeutet, dass die erste Kabelumlenkeinheit fest an der Schiebefenster- oder Schiebetüranordnung montiert ist, sodass die erste Kabelumlenkeinheit in Richtung der Schwerkraft ortsfest ist.

Die Umlenkachse einer Kabelumlenkvorrichtung verläuft quer, insbesondere rechtwinklig, zu einer Ebene, in welcher das Kabel die Kabelumlenkvorrichtung durchläuft.

Ist das Kabel in die erste und zweite Kabelumlenkvorrichtung eingelegt, dann wird das Kabel vom Schiebeelement herkommend durch die erste Kabelumlenkvorrichtung um die erste Umlenkachse in Richtung der Schwerkraft und in Richtung der zweiten Kabelumlenkvorrichtung umgelenkt, und durch die zweite Kabelumlenkvorrichtung um die zweite Umlenkachse in Richtung der ersten Kabelumlenkeinheit und entgegen der Richtung der Schwerkraft umgelenkt. Dabei bildet das Kabel einen U-förmigen Bereich, dort wo das Kabel durch die zweite Kabelumlenkvorrichtung umgelenkt wird. Die zweite Kabelumlenkeinheit wird vom Kabel im Tal des U-förmigen Bereichs gegen die Schwerkraft gehalten, sodass sich bei ruhendem Kabel die zweite Kabelumlenkeinheit in Richtung der Schwerkraft nicht bewegt.

Bei Verschiebung des Schiebeelements bewegt sich der U-förmige Bereich und damit zusammen die zweite Kabelumlenkeinheit im Führungskanal in Richtung der Schwerkraft oder in entgegengesetzter Richtung. Bewegt sich das Schiebeelement beispielsweise auf die ortsfeste Stromquelle zu dann verschiebt sich die zweite Kabelumlenkeinheit in Richtung der Schwerkraft. Bewegt sich das Schiebeelement beispielsweise von der ortsfesten Stromquelle weg dann verschiebt sich die zweite Kabelumlenkeinheit in zur Richtung der Schwerkraft entgegengesetzter Richtung.

Die erfindungsgemässe Schiebefenster- oder Schiebetüranordnung ermöglicht somit eine verlässliche und einfache Kabelverbindung des Schiebeelements mit einer ortsfesten Stromquelle. Das Kabelumlenksystem ist einfach und kompakt ausstaltbar, sodass die Verbindbarkeit auf engem Raum bereitstellbar ist. Das Kabel ist durch die konstante Gewichtskraft des von der zweiten Kabelumlenkeinrichtung umfassten Gewichts spannbar und zwar unabhängig von der Position der zweiten Kabelumlenkeinheit im Führungskanal. Mit anderen Worten ausgedrückt ist das Kabel dadurch unabhängig von der Position der zweiten Kabelumlenkeinheit im Führungskanal mit derselben konstanten Kraft spannbar.

Um zur erfindungsgemässen Schiebefenster- oder Schiebetüranordnung zu gelangen wurde in einem ersten erfinderischen Schritt erkannt, dass für gewisse stromverbrauchende Funktionalitäten eines Schiebeelements, beispielsweise das Abdunkeln eines schaltbaren Glases eines Schiebeelements, die Strom- bzw. Spannungscharakteristik am Schiebeelement entscheidend ist. D.h. für eine verlässliche Bereitstellung von gewissen strombasierten Funktionalitäten muss die Strom- bzw. Spannungscharakteristik bestimmte Anforderungen erfüllen. Es wurde erkannt, dass eine Kabelverbindung nötig ist, um diese Anforderungen zu erfüllen.

In einem weiteren erfinderischen Schritt wurde erkannt, dass es entscheidend ist, dass die Kabelverbindung in kompakter Form bereitstellbar sein soll, sodass diese in übliche Schiebefenster- oder Schiebetüranordnungen integrierbar ist.

In einem weiteren erfinderischen Schritt wurde erkannt, dass die Kabelverbindung durch ein Kabelumlenksystem bereitstellbar ist, welches ein Kabel, das ein Schiebeelement mit einer ortsfesten Stromquelle verbindet, gespannt umlenkt. Dabei wurde erkannt, dass es für die Langzeitstabilität der Kabelverbindung entscheidend ist, dass das Kabel im Betrieb mit einer gleichbleibenden konstanten Spannkraft gespannt ist. Es wurde erkannt, dass das Kabel durch ein am Kabelumlenksystem befestigbaren Gewicht spannbar ist.

Gemäss einer Ausführungsform der Schiebefenster- oder Schiebetüranordnung umfasst die zweite Kabelumlenkeinheit eine Befestigungsvorrichtung, durch die das Gewicht an der zweiten Kabelumlenkeinheit befestigbar ist.

Gemäss einer Ausführungsform der Schiebefenster- oder Schiebetüranordnung weist das Kabelumlenksystem ein längliches Kabelstützelement auf, das, bei in die erste und zweite Kabelumlenkvorrichtung eingelegtem Kabel, welches am Schiebeelement und an einer ortsfesten Stromquelle befestigt ist und das Schiebeelement mit der ortsfesten Stromquelle verbindet, zwischen dem Schiebeelement und dem Kabel angeordnet ist, parallel zur Verschieberichtung des Schiebeelements verläuft und sich über die Länge eines maximal möglichen Verschiebewegs des Schiebeelements erstreckt.

Das längliche Kabelstützelement stützt ein in die erste und zweite Kabelumlenkvorrichtung eingelegtes Kabel, sodass ein Durchhängen des gespannten Kabels durch das längliche Kabelstützelement beschränkt ist, auch bei einer Verschiebung des Schiebeelements um eine Strecke die dem maximal möglichen Verschiebeweg des Schiebeelements entspricht.

Das längliche Kabelstützelement kann am Aussenrahmen oder am Schiebeelement befestigt sein. Das längliche Kabelstützelement kann flexibel sein.

Gemäss einer Ausführungsform der Schiebefenster- oder Schiebetüranordnung weist das Kabelumlenksystem ein Kabelführungselement auf, das am Schiebeelement befestigt ist und am länglichen Kabelstützelement verschiebbar gelagert ist, sodass ein Kabel, welches das Schiebeelement mit einer ortsfesten Stromquelle verbindet, durch das Kabelführungselement zwischen das längliche Kabelstützelement und den Aussenrahmen führbar ist und bei Verschiebung des Schiebeelements sich das Kabelführungselement entlang des länglichen Kabelstützelements verschiebt.

Das Kabelführungselement führt das Kabel so zwischen den Aussenrahmen und das längliche Kabelstützelement, dass ein Durchhängen des gespannten Kabels durch das längliche Kabelstützelement beschränkt ist.

Das Kabelführungselement kann ein entsprechend geformtes Blechelement sein, an welchem ein Kabel zur Führung befestigbar ist.

Das Kabelführungselement kann Ausnehmungen aufweisen zur Durchführung eines Verbindungselements, wobei ein auf das Kabelführungselement aufgelegtes Kabel mit dem Verbindungselement am Kabelführungselement befestigbar ist. Das Verbindungselement kann ein metallisches oder polymerbasiertes Band sein. Das Verbindungselement kann beispielsweise ein Kabelbinder sein.

Gemäss einer Ausführungsform der Schiebefenster- oder Schiebetüranordnung ist das längliche Kabelstützelement ein längliches U-Profil, und umfasst das Kabelführungselement einen abgewinkelten Flächenbereich durch den das Kabelführungselement am U-Profil eingehängt ist.

Das längliche U-Profil führt das Kabelführungselement, stützt ein in die erste und zweite Kabelumlenkvorrichtung eingelegtes Kabel und hält ein solches Kabel in einer Richtung quer zur Längsrichtung des U-Profils zwischen den zwei parallelen Profilwänden gefangen.

Dabei kann das Kabelführungselement so ausgestaltet sein, dass dieses durch das stirnseitige Einführen des abgewinkelten Flächenbereichs in das U-Profil, verschiebbar am U-Profil befestigbar ist. Diese Befestigung ermöglicht eine Verschiebbarkeit des Kabelführungselements entlang des länglichen Kabelstützelements.

Gemäss einer Ausführungsform der Schiebefenster- oder Schiebetüranordnung ist die zweite Kabelumlenkeinheit mit der zweiten Umlenkachse quer, insbesondere rechtwinklig, zur ersten Umlenkachse und quer, insbesondere rechtwinklig, zur Richtung der Schwerkraft im Führungskanal angeordnet.

Dadurch wird eine platzsparende Anordnung des Kabelumlenksystems erreicht.

Die zweite Umlenkachse kann rechtwinklig zur ersten Umlenkachse verlaufen.

Gemäss einer Ausführungsform der Schiebefenster- oder Schiebetüranordnung hat die erste Kabelumlenkeinheit in einer Richtung quer, insbesondere rechtwinklig, zur ersten Umlenkachse und parallel zur Verschieberichtung des Schiebeelements eine maximale Ausdehnung A und die zweite Kabelumlenkeinheit in einer Richtung parallel zur zweiten Umlenkachse eine maximale Ausdehnung B von 0.5 A ≤ B ≤ 2.0 A.

Dadurch wird eine platzsparende Anordnung des Kabelumlenksystems erreicht.

Gemäss einer Ausführungsform der Schiebefenster- oder Schiebetüranordnung weist die erste Kabelumlenkeinheit ein Befestigungselement auf, das dazu ausgelegt ist einen Bereich eines Kabels an der ersten Kabelumlenkeinheit zu fixieren.

Dadurch ist ein Kabel, das das Schiebeelement mit einer ortsfesten Stromquelle verbindet und in die erste und zweite Kabelumlenkvorrichtung eingelegt ist, an der ersten Kabelumlenkeinheit fixierbar. Dadurch ist das Kabel zwischen dem Befestigungselement der ersten Kabelumlenkeinheit und einem Befestigungspunkt am Schiebeelement spannbar. Die konstante Gewichtskraft wirkt dann nicht auf die Verbindungsstelle, an der das Kabel mit der ortsfesten Stromquelle verbunden ist.

Das Befestigungselement kann Ausnehmungen umfassen zur Durchführung eines Verbindungselements, wobei ein auf die erste Kabelumlenkeinheit aufgelegter Bereich des Kabels mit dem Verbindungselement an der ersten Kabelumlenkeinheit fixierbar ist. Das Verbindungselement kann ein metallisches oder polymerbasiertes Band sein. Das Verbindungselement kann beispielsweise ein Kabelbinder sein.

Gemäss einer Ausführungsform der Schiebefenster- oder Schiebetüranordnung weist die erste und zweite Kabelumlenkeinheit jeweils ein Gehäuse auf und überragt ein Gehäuseteil des jeweiligen Gehäuses die jeweilige erste und zweite Kabelumlenkvorrichtung, sodass ein in die erste und zweite Kabelumlenkvorrichtung eingelegtes Kabel in einer Richtung entlang der jeweiligen ersten und zweiten Umlenkachse gefangen ist.

Dadurch ist ein in die erste und zweite Kabelumlenkvorrichtung eingelegtes Kabel bei der Umlenkung sicher geführt und gehalten.

Das Gehäuse der zweiten Kabelumlenkeinheit kann zweiteilig sein, wobei die zwei Teile zusammensteckbar sind. Dann ist das Gehäuse der zweiten Kabelumlenkeinheit in zwei Teile trennbar, um ein Kabel in die zweite Kabelumlenkvorrichtung einzulegen, und zusammensteckbar, um das in die zweite Kabelumlenkvorrichtung eingelegte Kabel in der zweiten Kabelumlenkvorrichtung zu sichern.

Gemäss einer Ausführungsform der Schiebefenster- oder Schiebetüranordnung weist die zweite Kabelumlenkeinheit Rippen am Gehäuse auf, die vom Gehäuse vorstehen und dazu ausgelegt sind die zweite Kabelumlenkeinheit im Führungskanal zu führen.

Die Rippen können an einer ersten Gehäusewand, die sich quer, insbesondere rechtwinklig, zur zweiten Umlenkachse erstreckt, und/oder an einer weiteren Gehäusewand die sich quer, insbesondere rechtwinklig, zur ersten Gehäusewand erstreckt, angeordnet sein.

Gemäss einer Ausführungsform der Schiebefenster- oder Schiebetüranordnung weist die erste Kabelumlenkeinheit eine dritte Kabelumlenkvorrichtung auf, die dazu ausgelegt ist ein darin eingelegtes Kabel um eine dritte Umlenkachse, die schräg zur ersten Umlenkachse verläuft, umzulenken, und weist die zweite Kabelumlenkeinheit eine vierte Kabelumlenkvorrichtung auf, die dazu ausgelegt ist ein darin eingelegtes Kabel um die zweite Umlenkachse, umzulenken und beabstandet zur zweiten Kabelumlenkvorrichtung angeordnet ist.

Dadurch wird ein in die erste, zweite, dritte und vierte Kabelumlenkvorrichtung eingelegtes Kabel vier Mal umgelenkt, wodurch innerhalb derselben Länge des Führungskanals ein längeres Kabel spannbar und gespannt umlenkbar ist.

Gemäss einer Ausführungsform der Schiebefenster- oder Schiebetüranordnung verläuft die erste Umlenkachse in einer ersten Ebene, die sich quer, insbesondere rechtwinklig, zur Richtung der Schwerkraft erstreckt, verläuft die dritte Umlenkachse in einer zur ersten Ebene parallelen und von der ersten Ebene beabstandeten weiteren Ebene, und schliesst eine Normalprojektion der ersten Umlenkachse auf die weitere Ebene mit der dritten Umlenkachse einen Winkel alpha von 45° ≤ alpha ≤ 90° ein.

Dadurch wird eine platzsparende Anordnung des Kabelumlenksystems erreicht.

Gemäss einer Ausführungsform der Schiebefenster- oder Schiebetüranordnung ist mindestens eine Kabelumlenkvorrichtung eine Umlenkrolle, die um die Umlenkachse drehbar gelagert ist, oder ist jede Kabelumlenkvorrichtung eine Umlenkrolle, die um die Umlenkachse drehbar gelagert ist.

Dadurch ist ein Kabel im Wesentlichen reibungsfrei umlenkbar.

Eine Umlenkrolle kann dem Umfang entlang verlaufend eine Rille aufweisen, in welche ein Kabel einlegbar ist.

Gemäss einer Ausführungsform der Schiebefenster- oder Schiebetüranordnung ist die Befestigungsvorrichtung eine Einhängevorrichtung mit einem Vorsprung, die so ausgestaltet ist, dass ein Gewicht am Vorsprung ein- und aushängbar ist.

Dadurch kann ein auf das umzulenkende Kabel abgestimmtes Gewicht an der zweiten Kabelumlenkeinheit befestigt werden, wobei die abgestimmte konstante Gewichtskraft das umzulenkende Kabel ausreichend spannt.

Die Befestigungsvorrichtung kann eine Öffnung aufweisen, die sich in eine Richtung parallel zur zweiten Umlenkachse erstreckt, sodass das Gewicht durch Einschieben des Gewichts in die Öffnung an der Einhängevorrichtung ein- und aushängbar ist.

Gemäss einer Ausführungsform der Schiebefenster- oder Schiebetüranordnung weist die Schiebefenster- oder Schiebetüranordnung ein Kabel auf, wobei das Kabel am Schiebeelement und an der ortsfesten Stromquelle befestigt ist, das Schiebeelement mit der ortsfesten Stromquelle verbindet, und mit der konstanten Gewichtskraft des Gewichts gespannt umgelenkt wird.

Gemäss einer Ausführungsform der Schiebefenster- oder Schiebetüranordnung sind die erste und die zweite Kabelumlenkeinheit jeweils einstückig ausgebildet. Die erste und die zweite Kabelumlenkeinheit können aus Kunststoff mittels eines additiven Verfahrens gefertigt sein, sodass Montageschritte entfallen.

Die erfindungsgemässe Schiebefenster- oder Schiebetüranordnung ist im Folgenden rein beispielhaft anhand konkreter in den Figuren dargestellter Ausführungsformen näher beschrieben. Es zeigen:
- Figur 1: die Teile eines Kabelumlenksystems und ein Schiebeelement gemäss einer Ausführungsform der Schiebefenster- oder Schiebetüranordnung; und
- Figur 2: eine erste Kabelumlenkeinheit und eine zweite Kabelumlenkeinheit gemäss einer Ausführungsform der Schiebefenster- oder Schiebetüranordnung.

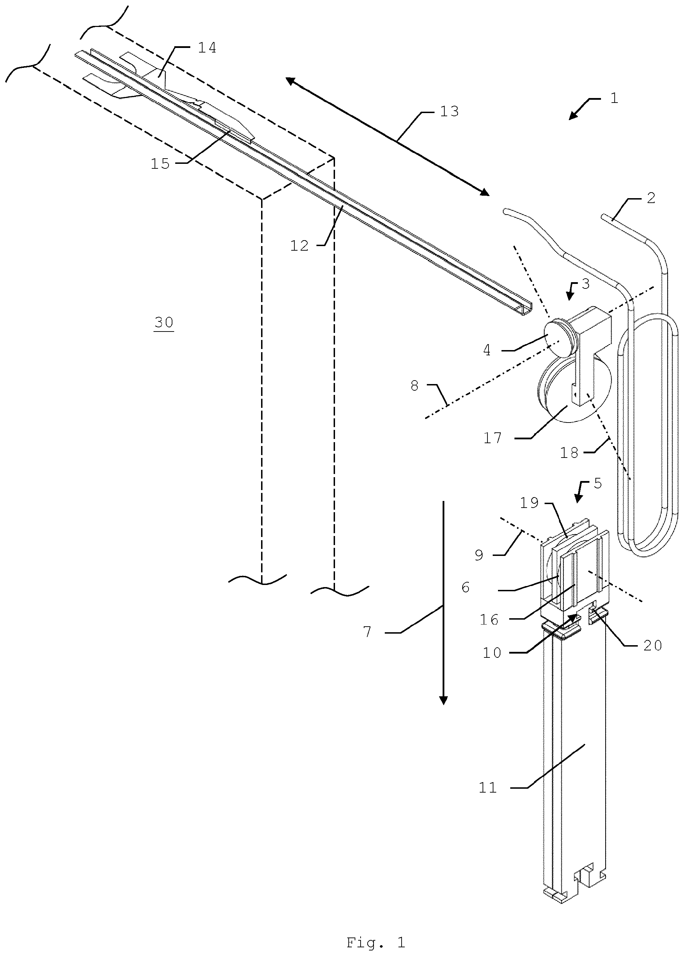

Figur 1 zeigt die Teile eines Kabelumlenksystems 1 und ein Schiebeelement 30 einer Ausführungsform der Schiebefenster- oder Schiebetüranordnung. Zur besseren Darstellung der Teile sind diese zueinander versetzt gezeigt. Das Kabelumlenksystem 1 kann als Kit ausgeführt sein, sodass bestehende Schiebefenster- oder Schiebetüranordnungen damit ausrüstbar sind. Das im Aussenrahmen verschiebbar gelagerte Schiebeelement 30 ist in Figur 1 angedeutet. Der Führungskanal ist in Figur 1 nicht gezeigt.

Das in Figur 1 gezeigte Kabelumlenksystem 1 umfasst ein längliches Kabelstützelement 12. Das längliche Kabelstützelement 12, ist ein längliches U-Profil.

Das in Figur 1 gezeigte Kabelumlenksystem 1 umfasst ebenfalls ein Kabelführungselement 14, das am Schiebeelement 30 befestigbar ist und am länglichen Kabelstützelement 12 verschiebbar gelagert ist. Das Kabelführungselement 14 umfasst einen abgewinkelten Flächenbereich durch den das Kabelführungselement 14 am U-Profil eingehängt ist. Bei Verschiebung des Schiebeelements 30 verschiebt sich das Kabelführungselement 14 entlang des länglichen Kabelstützelements 12.

Ein am Schiebeelement 30 befestigtes Kabel 2 ist am Kabelführungselement befestigbar und so zwischen das längliche Kabelstützelement 12 und den Aussenrahmen führbar. Das Kabel 2 verläuft dann so zwischen dem länglichen Kabelstützelement 12 und dem Aussenrahmen, dass ein Durchhängen des gespannten Kabels 2 durch das längliche Kabelstützelement 12 beschränkt ist, so auch bei einer Verschiebung des Schiebeelements 30 um eine Strecke die dem maximal möglichen Verschiebeweg entspricht.

Die Schiebefenster- oder Schiebetüranordnung ist auch ohne das Kabelstützelement und ohne das Kabelführungselement realisierbar. Dann muss das Kabel so gespannt sein, dass ein Durchhängen des gespannten Kabels durch die Spannung des Kabels in beabsichtigter Weise beschränkt ist. In beabsichtigter Weise kann bedeuten, dass das Kabel vom Aussenrahmen nicht vorragt. D.h. das gespannte Kabel ist im Betrieb, also auch beim Verschieben des Schiebeelements, nicht sichtbar.

Die zweite Kabelumlenkeinheit 5 ist so im nicht gezeigten Führungskanal angeordnet, dass die zweite Umlenkachse 9 quer zur ersten Umlenkachse 8 und quer zur Richtung der Schwerkraft 7 verläuft.

Die zweite Kabelumlenkeinheit 5 hat Rippen 16 am Gehäuse, die vom Gehäuse vorstehen und dazu ausgelegt sind die zweite Kabelumlenkeinheit 5 im Führungskanal zu führen.

Die erste Kabelumlenkeinheit 3 hat eine dritte Kabelumlenkvorrichtung 17, die dazu ausgelegt ist das darin eingelegte Kabel 2 um eine dritte Umlenkachse 18, die schräg zur ersten Umlenkachse 8 verläuft, umzulenken.

Die zweite Kabelumlenkeinheit 5 hat eine vierte Kabelumlenkvorrichtung 19, die dazu ausgelegt ist das darin eingelegte Kabel 2 um die zweite Umlenkachse 9, umzulenken, und ist beabstandet zur zweiten Kabelumlenkvorrichtung 6 angeordnet.

Die erste Umlenkachse 8 verläuft in einer ersten Ebene, die sich quer zur Richtung der Schwerkraft 7 erstreckt. Die dritte Umlenkachse 18 verläuft in einer zur ersten Ebene parallelen und von der ersten Ebene beabstandeten weiteren Ebene. Eine Normalprojektion der ersten Umlenkachse 8 auf die weitere Ebene schliesst mit der dritten Umlenkachse 18 einen Winkel alpha von 45° ≤ alpha ≤ 90° ein.

Die Kabelumlenkvorrichtungen 4, 6, 17, 19 sind jeweils eine Umlenkrolle, die um die jeweilige Umlenkachse 8, 9, 18 drehbar gelagert sind.

Die Befestigungsvorrichtung 10 ist eine Einhängevorrichtung mit einem Vorsprung 20. Die Einhängevorrichtung ist so ausgestaltet, dass ein Gewicht 11 am Vorsprung 20 ein- und aushängbar ist.

Die Befestigungsvorrichtung 10 weist eine Öffnung auf, die sich in eine Richtung parallel zur zweiten Umlenkachse erstreckt, sodass das Gewicht 11 durch Einschieben des Gewichts 11 in die Öffnung an der Einhängevorrichtung ein- und aushängbar ist.

Das Kabelumlenksystem 1 umfasst das Kabel 2 und das Gewicht 11, wobei das Kabel 2 am Schiebeelement 30 und an der ortsfesten Stromquelle befestigbar ist, das Schiebeelement 30 mit der ortsfesten Stromquelle verbindbar ist, und durch das Gewicht 11 spannbar und gespannt umlenkbar ist.

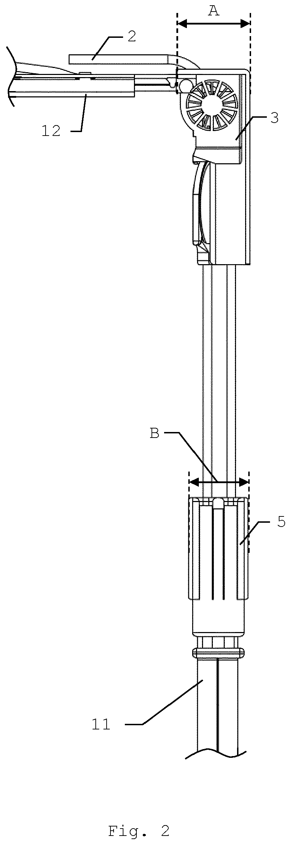

Figur 2 zeigt eine erste Kabelumlenkeinheit 3 und eine zweite Kabelumlenkeinheit 5 gemäss einer Ausführungsform der Schiebefenster- oder Schiebetüranordnung. Zur besseren Darstellung der Teile sind diese zueinander versetzt gezeigt. Die erste Kabelumlenkeinheit 3 hat in einer Richtung quer zur ersten Umlenkachse 8 und parallel zur Verschieberichtung 13 des Schiebeelements 30 eine maximale Ausdehnung A und die zweite Kabelumlenkeinheit 5 hat in einer Richtung parallel zur zweiten Umlenkachse 9 eine maximale Ausdehnung B von 0.5 A ≤ B ≤ 2.0 A.

Die erste und die zweite Kabelumlenkeinheit 3, 5 sind jeweils einstückig ausgebildet und umfassen ein Gehäuse.

## Patentansprüche

1. Schiebefenster- oder Schiebetüranordnung mit
einem Aussenrahmen und einem im Aussenrahmen verschiebbar gelagerten Schiebeelement (30),
einem Kabelumlenksystem (1), zur Spannung und Umlenkung eines Kabels (2), mit
einer ersten Kabelumlenkeinheit (3) mit einer ersten Kabelumlenkvorrichtung (4),
einer zweiten Kabelumlenkeinheit (5), mit einer zweiten Kabelumlenkvorrichtung (6), und
einem Führungskanal, der sich entlang der Richtung der Schwerkraft (7) erstreckt,
wobei
die erste Kabelumlenkeinheit (3)
so ausgestaltet ist, dass zur Spannung und Umlenkung eines Kabels (2), das Kabel (2) in die erste Kabelumlenkvorrichtung (4) einlegbar ist, und
in Bezug auf eine Bewegung in Richtung der Schwerkraft (7) positionsfest an der Schiebefenster- oder Schiebetüranordnung so montiert ist, dass ein in die erste Kabelumlenkvorrichtung (4) eingelegtes Kabel (2) um eine erste Umlenkachse (8) in Richtung der Schwerkraft (7) umgelenkt wird,
die zweite Kabelumlenkeinheit (5)
so ausgestaltet ist, dass zur Spannung und Umlenkung eines Kabels (2), das Kabel (2) in die zweite Kabelumlenkvorrichtung (6) einlegbar ist und, dass diese im Führungskanal verschiebbar ist,
so im Führungskanal angeordnet ist, dass, bei in die erste und zweite Kabelumlenkvorrichtung (4, 6) eingelegtem Kabel (2), welches am Schiebeelement (30) und an einer ortsfesten Stromquelle befestigt ist und das Schiebeelement (30) mit der ortsfesten Stromquelle verbindet,
die zweite Kabelumlenkeinheit (5) durch das Kabel (2) im Führungskanal gegen die Schwerkraft gehalten wird,
sich bei einer Verschiebung des Schiebeelements (30) die zweite Kabelumlenkeinheit (5) in Richtung der Schwerkraft (7) oder in entgegengesetzter Richtung im Führungskanal verschiebt, und
das Kabel (2) um eine zweite Umlenkachse (9) in Richtung der ersten Kabelumlenkeinheit (3) umgelenkt wird, und
ein Gewicht (11) umfasst, sodass sich bei einer Verschiebung des Schiebeelements (30) die zweite Kabelumlenkeinheit (5) und das Gewicht (11) in Richtung der Schwerkraft oder in entgegengesetzter Richtung im Führungskanal verschieben, und
das Kabelumlenksystem (1) dazu ausgelegt ist, ein Kabel (2), welches das Schiebeelement (30) mit einer ortsfesten Stromquelle verbindet, mit der konstanten Gewichtskraft des Gewichts (11) zu spannen und dadurch das Kabel (2) bei einer Verschiebung des Schiebeelements (30) mit einer gleichbleibenden konstanten Spannkraft gespannt umzulenken.

2. Schiebefenster- oder Schiebetüranordnung nach Anspruch 1, wobei die zweite Kabelumlenkeinheit (5) eine Befestigungsvorrichtung (10) umfasst, durch die das Gewicht (11) an der zweiten Kabelumlenkeinheit (5) befestigbar ist.

3. Schiebefenster- oder Schiebetüranordnung nach einem der Ansprüche 1 bis 2, wobei das Kabelumlenksystem ein längliches Kabelstützelement (12) aufweist, das, bei in die erste und zweite Kabelumlenkvorrichtung (4, 6) eingelegtem Kabel (2), welches am Schiebeelement (30) und an einer ortsfesten Stromquelle befestigt ist und das Schiebeelement (30) mit der ortsfesten Stromquelle verbindet,
zwischen dem Schiebeelement (30) und dem Kabel (2) angeordnet ist,
parallel zur Verschieberichtung (13) des Schiebeelements (30) verläuft und
sich über die Länge eines maximal möglichen Verschiebewegs des Schiebeelements (30) erstreckt.

4. Schiebefenster- oder Schiebetüranordnung nach Anspruch 3, wobei das Kabelumlenksystem (1) ein Kabelführungselement (14) aufweist, das am Schiebeelement (30) befestigt ist und am länglichen Kabelstützelement (12) verschiebbar gelagert ist, sodass ein Kabel (2), welches das Schiebeelement (30) mit einer ortsfesten Stromquelle verbindet, durch das Kabelführungselement (14) zwischen das längliche Kabelstützelement (12) und den Aussenrahmen führbar ist und bei Verschiebung des Schiebeelements (30) sich das Kabelführungselement (14) entlang des länglichen Kabelstützelements (12) verschiebt.

5. Schiebefenster- oder Schiebetüranordnung nach Anspruch 4, wobei das längliche Kabelstützelement (12) ein längliches U-Profil ist, und das Kabelführungselement (14) einen abgewinkelten Flächenbereich (15) umfasst durch den das Kabelführungselement (14) am U-Profil eingehängt ist.

6. Schiebefenster- oder Schiebetüranordnung nach einem der Ansprüche 1 bis 5, wobei die zweite Kabelumlenkeinheit (5) mit der zweiten Umlenkachse (9) quer zur ersten Umlenkachse (8) und quer zur Richtung der Schwerkraft (7) im Führungskanal angeordnet ist.

7. Schiebefenster- oder Schiebetüranordnung nach Anspruch 6, wobei die erste Kabelumlenkeinheit (3) in einer Richtung quer zur ersten Umlenkachse (8) und parallel zur Verschieberichtung (13) des Schiebeelements (30) eine maximale Ausdehnung A und die zweite Kabelumlenkeinheit (5) in einer Richtung parallel zur zweiten Umlenkachse (9) eine maximale Ausdehnung B von 0.5 A ≤ B ≤ 2.0 A hat.

8. Schiebefenster- oder Schiebetüranordnung nach einem der Ansprüche 1 bis 7, wobei die erste Kabelumlenkeinheit (3) ein Befestigungselement aufweist, das dazu ausgelegt ist einen Bereich eines Kabels (2) an der ersten Kabelumlenkeinheit (3) zu fixieren.

9. Schiebefenster- oder Schiebetüranordnung nach einem der Ansprüche 1 bis 8, wobei die erste und zweite Kabelumlenkeinheit (3, 5) jeweils ein Gehäuse aufweisen und ein Gehäuseteil des jeweiligen Gehäuses die jeweilige erste und zweite Kabelumlenkvorrichtung (4, 6) überragt, sodass ein in die erste und zweite Kabelumlenkvorrichtung (4, 6) eingelegtes Kabel (2) in einer Richtung entlang der jeweiligen ersten und zweiten Umlenkachse (8, 9) gefangen ist.

10. Schiebefenster- oder Schiebetüranordnung nach Anspruch 9, wobei die zweite Kabelumlenkeinheit (5) Rippen (16) am Gehäuse aufweist, die vom Gehäuse vorstehen und dazu ausgelegt sind die zweite Kabelumlenkeinheit (5) im Führungskanal zu führen.

11. Schiebefenster- oder Schiebetüranordnung nach einem der Ansprüche 1 bis 10, wobei die erste Kabelumlenkeinheit (3) eine dritte Kabelumlenkvorrichtung (17) aufweist, die dazu ausgelegt ist ein darin eingelegtes Kabel (2) um eine dritte Umlenkachse (18), die schräg zur ersten Umlenkachse (8) verläuft, umzulenken, und die zweite Kabelumlenkeinheit (5) eine vierte Kabelumlenkvorrichtung (19) aufweist, die dazu ausgelegt ist ein darin eingelegtes Kabel (2) um die zweite Umlenkachse (9), umzulenken, und beabstandet zur zweiten Kabelumlenkvorrichtung (6) angeordnet ist.

12. Schiebefenster- oder Schiebetüranordnung nach Anspruch 11, wobei die erste Umlenkachse (8) in einer ersten Ebene, die sich quer zur Richtung der Schwerkraft (7) erstreckt, verläuft, die dritte Umlenkachse (18) in einer zur ersten Ebene parallelen und von der ersten Ebene beabstandeten weiteren Ebene verläuft, und eine Normalprojektion der ersten Umlenkachse (8) auf die weitere Ebene mit der dritten Umlenkachse (18) einen Winkel alpha von 45° ≤ alpha ≤ 90° einschliesst.

13. Schiebefenster- oder Schiebetüranordnung nach einem der Ansprüche 1 bis 12, wobei mindestens eine Kabelumlenkvorrichtung (4, 6, 17, 19) eine Umlenkrolle ist, die um die Umlenkachse (8, 9, 18) drehbar gelagert ist, oder jede Kabelumlenkvorrichtung (4, 6, 17, 19) eine Umlenkrolle ist, die um die Umlenkachse (8, 9, 18) drehbar gelagert ist.

14. Schiebefenster- oder Schiebetüranordnung nach einem der Ansprüche 2 bis 13, wobei die Befestigungsvorrichtung (10) eine Einhängevorrichtung mit einem Vorsprung (20) ist, die so ausgestaltet ist, dass das Gewicht (11) am Vorsprung (20) ein- und aushängbar ist.

15. Schiebefenster- oder Schiebetüranordnung nach einem der Ansprüche 1 bis 14, wobei die Schiebefenster- oder Schiebetüranordnung ein Kabel (2) aufweist, und das Kabel (2) am Schiebeelement (30) und an der ortsfesten Stromquelle befestigt ist, das Schiebeelement (30) mit der ortsfesten Stromquelle verbindet, und mit der konstanten Gewichtskraft des Gewichts (11) gespannt umgelenkt wird,
und/oder
die erste und die zweite Kabelumlenkeinheit (3, 5) jeweils einstückig ausgebildet sind.
